# EUROPEAN PATENT SPECIFICATION

(11) **EP 1 199 641 B1**
(45) Date of publication and mention of the grant of the patent: **09.08.2006**
(21) Application number: 01124884.6
(22) Date of filing: 18.10.2001
(51) Int. Cl.: G06F 13/24

(54) **Data processing device used in serial communication system**
Datenverarbeitungsgerät für serielles Kommunikationssystem
Appareil de traitement de données pour système de communication série

(30) Priority: 19.10.2000 JP 2000319557
(43) Date of publication of application: 24.04.2002
(73) Proprietor: MATSUSHITA ELECTRIC INDUSTRIAL CO., LTD., Kadoma-shi, Osaka 571-0050 (JP)
(72) Inventor: Kimura, Kazunobu, Yokosuka-shi, Kanagawa 238-0021 (JP)
(74) Representative: Grünecker, Kinkeldey, Stockmair & Schwanhäusser Anwaltssozietät

(56) References cited:
- US-A- 6 115 779
- US-A- 6 119 195

## Description

### Background of the Invention

The present invention is related to a data processing device used in a serial communication system in which a communication is carried out via a serial interface with a host computer.

Generally speaking, a communication by way of a USB (Universal Serial Bus) interface corresponding to one sort of serial interfaces is conventionally established between a host computer (will be referred to as a "USE host" hereinafter) and a data processing device (will be referred to as a "USB device" hereinafter) controlled by this USB host. The USB host owns such a function as a data transfer/management master. Basically, a data processing operation executed in this USB device is carried out in correspondence with an interrupt initiated by an occurrence of a bus event when a token, data, a bus signal, and the like are received from the USB host, or when data and the like are transmitted to the USB host. Also, with respect to a large capacity of data, or such data which are highly frequently produced in a periodic manner, a predetermined amount of these data are buffered, and thus an interrupt is produced.

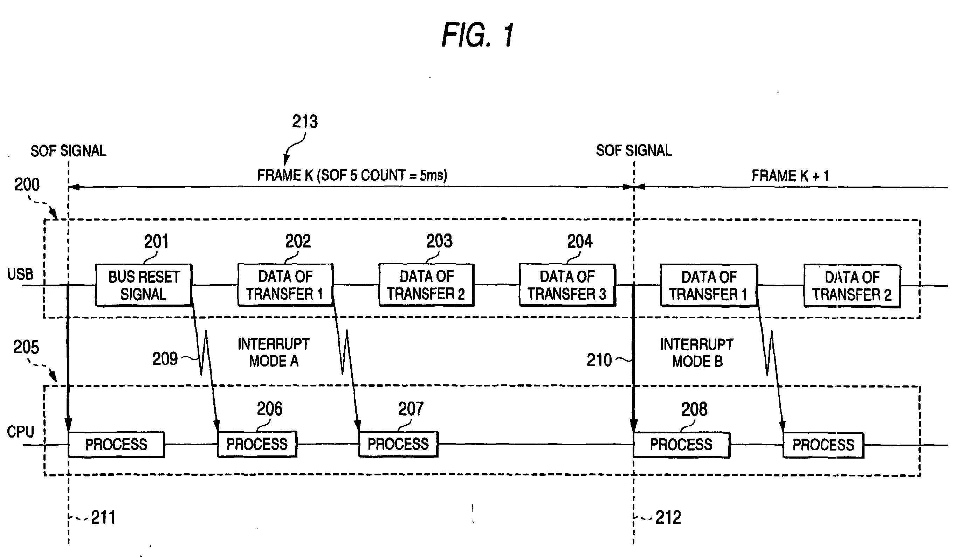

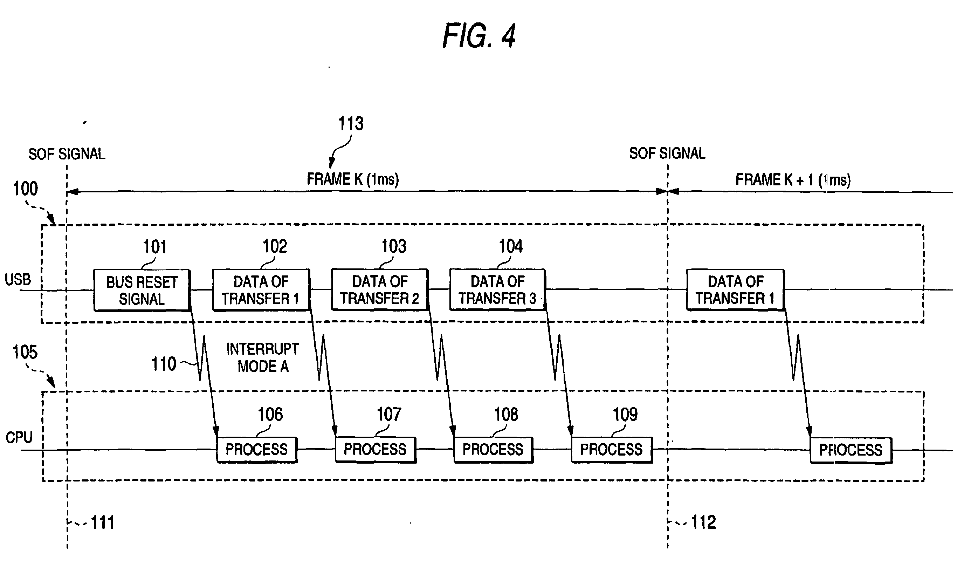

Fig. 4 is a time chart for explaining an example of an interrupt operation in a conventional USB device. In Fig. 4, 1 frame 113 (1 ms) defined by the USB specification is indicated as a term (time period) between SOF (Start Of Frame) signals 111 and 112, which are received from the USB host. In this 1 frame 113 (K-th frame), a bus event 100 occurred on a USB bus includes a bus reset signal 101, data 102 of a transfer 1, data 103 of a transfer 2, and data 104 of a transfer 3. These signal and data are time-sequentially arranged. Also, a data process 105 executed by a CPU (Central Processing Unit) includes processes 106 to 109, which are time-sequentially arranged. An interrupt 110 (indicated as "interrupt mode A" in this drawing) occurs every bus event. This interrupt 110 is used to notify the bus event 100 on the USB bus to the CPU. Every time this interrupt 110 occurs, the data process 105 is executed by the CPU. In other words, the process 106 with respect to the bus reset signal 101, the process 107 with respect to the data 102 of the transfer 1, the process 108 with respect to the data 103 of the transfer 2, and the process 109 with respect to the data 104 of the transfer 3 are sequentially carried out.

However, in the above-described conventional data processing device used in the serial communication system, the USB host manages all transfer operations as to the data and the like, and also schedules the transfer timing. As a result, on the side of the USB device, a total interrupt time which is directly proportional to the occurrence times of the bus events while the bus signals and the data are transmitted/received cannot be adjusted.

Also, in such a case that an USB interface is assembled into a composite system, since communication application software is increased, sorts of transfer operations and a total number of end points would be increased, so that a total time of interrupts would be increased. In other words, work loads with respect to a CPU would be increased, resulting in unfavorable conditions.

US-A-6 115 779 specifies an interrupt management system that enables a user to handle interrupt events either in a real time mode of operation, or in a batch mode of operation. In the real time mode, an interrupt request signal is asserted in response to each interrupt event. In the batch mode, an interrupt request signal is delayed until, a predetermined number of interrupt event is Detected, or until a predetermined time interval has elapsed since the last interrupt event is captured. In response to an interrupt event, the corresponding bit in an interrupt register is set to an active state. A control interrupt bit is provided in an interrupt control register for each interrupt to enable the activation of an interrupt request pin in response to the interrupt event. A batch enable bit is provided in a batch register for each interrupt event to enable the batching of the interrupt event.

US-A-6 119 195 describes a method and apparatus for virtualising a serial bus information source/sink point of a serial bus device into an address space of a processor. A register unit is coupled to a parallel port device to support a serial bus transaction between the processor and the serial bus device. The register unit has a plurality of registers that are mapped into the address space of the processor via the parallel port device, one of the plurality of registers corresponding to the serial bus information source/sink point. A control circuit is coupled to the register unit to allow the processor to access the information source/sink point via the parallel port device.

### Summary of the Invention

The present invention has been made to solve the above-explained problems, and therefore, has an object to provide such a data processing device used in a serial communication system, which is capable of being assembled into a composite system of a USB interface (serial interface), while a total interrupt time can be adjusted on the side of a USB device (namely, data processing device), and furthermore, a work load given to a CPU can be reduced.

The above-described object is achieved with the features of claim 1. Preferred embodiments are referred to in subclaims.

### Brief Description of the Drawings

Fig. 1 is a time chart for explaining an example of an interrupt operation executed in a USB device, according to an embodiment of the present invention;
Fig. 2 is a block diagram for indicating a structure of the USB device according to the present invention;
Fig. 3 is a diagram for schematically indicating a structure of each of end point buffers which constitute a data buffer, and also a structure of a status register employed in connection with these end point buffers; and
Fig. 4 is a time chart for explaining an example of the interrupt operation executed in the conventional USB device.

### Detailed Description of the Preferred Embodiment

Referring now to drawings, an embodiment of the present invention will be described in detail.

First, an example of an interrupt operation executed in a USB device according to an embodiment of the present invention will now be explained with reference to Fig. 1. In Fig. 1, 1 frame (one frame) 213 is set as a time period defined between an SOF signal 211 and another SOF signal 212, in other words, a time period (5 ms) corresponding to 5 counts of SOF signals derived from a USB host. In this 1 frame 213 (K-th frame), a bus event 200 occurred on a USB bus includes a bus reset signal 201, data 202 of a transfer 1, data 203 of a transfer 2, and data 204 of a transfer 3, which are arranged in a time sequential manner. Also, a data process 205 executed by a CPU includes processes 206 to 208, which are time-sequentially arranged.

In this case, as an interrupt used to notify the bus event 200 occurred on the USB bus to the CPU, two sorts of interrupts are provided, i.e., both an interrupt 209 (indicated as "interrupt mode A" in this drawing) and another interrupt 210 (indicated as "interrupt mode B" in this drawing) . Similar to the conventional system, the interrupt 209 made by the interrupt mode A is produced every time a bus event occurs. Then, every time this interrupt 209 is produced, the data process 205 is executed by the CPU. On the other hand, the interrupt 210 made by the interrupt mode B is produced every 1 frame 213 in synchronism with the SOF signal. At this timing, the data process 205 is performed by the CPU. That is, the interrupt 210 is produced, while the 1 frame 213 is set as an interrupt time period. In other words, both the process 206 with respect to the bus reset signal 201 and the process 207 with respect to the data 202 of the transfer 1 are sequentially carried out in the K-the frame, whereas the process 208 with respect to both the data 203 of the transfer 2 and the data 204 of the transfer 3 is carried out in a (K+1)-th frame subsequent to the K-th frame. It should be understood that although the interrupt time period made by the interrupt mode B is set to 5 ms which corresponds to 5 counts of the SOF signals in this embodiment, this interrupt time period may be set to arbitrarily selected time.

The above-described interrupt mode "A" is applied to such a transfer operation of a bus signal, control system data, and the like, for instance, a cable cut-out, and resetting of a USB bus. These events occur in a low frequent degree, but require highly urgent, i.e., instantaneous process operations are needed. In the example of Fig. 1, the interrupt mode A is applied to both the bus reset signal 201 and the data 202 of the transfer 1. Similar to the conventional art, this interrupt mode A corresponds to such an interrupt mode which is not managed based upon time. On the other hand, the above-explained interrupt mode B corresponds to such an interrupt mode which is managed based upon time, and is applied to such a transfer operation with respect to speech (voice) data produced in a high frequent degree, and also packet communication data, the capacity of which is large, and which is locally produced in a high frequent degree. In the example of Fig. 1, this interrupt mode "B" is applied to both the data 203 of the transfer 2 and the data 204 of the transfer 3. It is so required that a decision as to whether the interrupt mode "A", or the interrupt mode "B" may be applied to a certain event should be previously set with respect to each of bus events (end point, and bus signal).

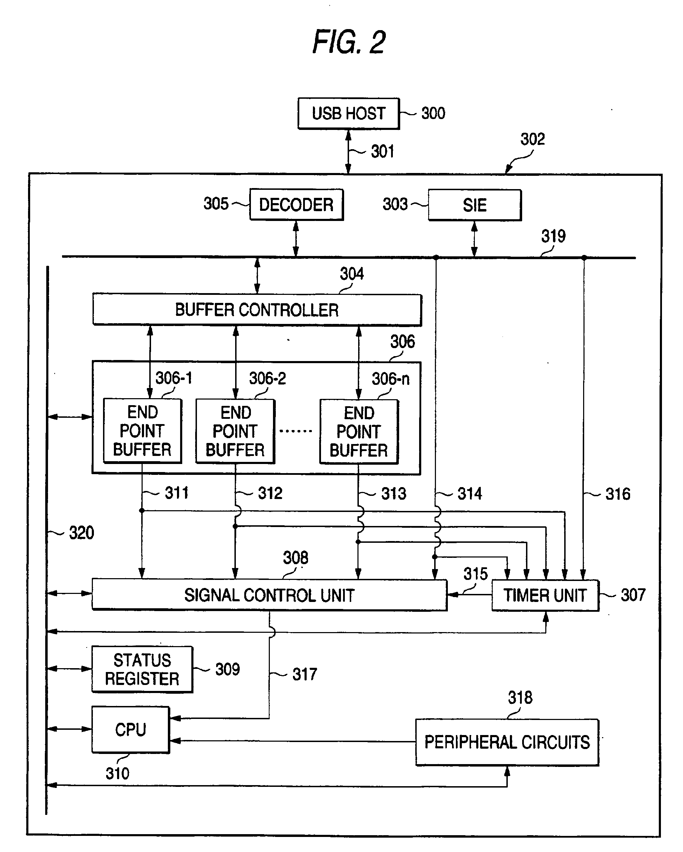

Next, a description will now be made of a structure of a USB device according to this embodiment with reference to Fig. 2. In Fig. 2, a USB host 300 is mutually connected via a USB cable 301 to a USB device 302. In the USB device 302, a buffer controller 304 which controls an SIE (Serial Interface Engine) 303 and a data buffer (will be explained later) 306 is mutually connected via a bus 319 to a decoder 305 which analyzes an end point address. Also, the data buffer 306 corresponding to each of the end points, a timer unit 307, a signal control unit 308, a status register 309 used in the data buffer 306, a CPU 310 for executing a data processing operation and the like, and also other peripheral circuit 318 are mutually connected via a bus 320 to each other. The timer unit 307 measures a preselected time duration which constitutes the interrupt time period of the interrupt mode "B." In this embodiment, the timer unit 307 measures 5 ms (milliseconds), or counts 5 sets of SOF signals. The signal control unit 308 outputs an interrupt signal 317 in response to a signal supplied from the data buffer 306.

The data buffer 306 includes a plurality of end point buffers 306-1, 306-2, ..., 306-n (symbol "n" being natural number) which correspond to the respective end points. These end point buffers 306 are connected to the buffer controller 304. Also, the end point buffers 306-1, 306-2, ..., 306-n are connected to the signal control unit 308, respectively, and also connected to the timer unit 307, respectively. As a result, notification signals 311 to 313 in correspondence with a buffer status every end point are supplied to both the signal control unit 308 and the timer unit 307 from the end point buffers 306-1, 306-2, ..., 306-n, respectively. Also, a bus 319 is connected to both the signal control unit 308 and the timer unit 307. As a result, a signal 314 is supplied to the signal control unit 308 and the timer unit 307, respectively. This signal 314 is used to notify that a USB cable is connected/disconnected, and USB bus signals such as a USB reset, a USB suspend, and a USB resume are produced. Furthermore, the bus 319 is connected to the timer unit 307, so that another signal 316 for notifying an SOF signal is supplied to the timer unit 307.

The timer unit 307 is connected to the signal control unit 308. As a result, such a signal 315 is supplied from the timer unit 307 to the signal control circuit 308. This signal 315 notifies such a fact that a predetermined time duration which constitutes the interrupt time period of the interrupt mode B is measured. Also, the signal control unit 308 is connected to the CPU 310. As a result, an interrupt signal 317 produced based upon either the signals 311 to 313 or the signal 314 is supplied from the signal control unit 308 to the CPU 310. In response to this interrupt signal 317, an interrupt made by either the above-explained interrupt mode "A" or the above-described interrupt mode "B" is carried out with respect to the CPU 310. Furthermore, other peripheral circuits 318 are similarly connected to the CPU 310. As a result, various sorts of signals are supplied to the CPU 310. It should also be noted that a decision as to whether the interrupt mode "A", or the interrupt mode "B" may be applied to a certain event should be previously set with respect to each of bus events (end points, and bus signal) in the signal control unit 308. This setting operation may be carried out in a programmable manner.

Subsequently, operations of the USB device 302 will now be explained. First, when the USB device 302 detects a bus event occurred on the USB cable 301, both the SIE 303 and the decoder 305 analyze this bus event. When the analyzed bus event corresponds to a USB bus signal, the USB device 302 notifies this fact to the signal control unit 308 by employing the signal 314. When the analyzed bus event corresponds to such a bus event related to transmission/reception of transfer data with respect to each of the end points, the USB device 302 transfers data via the buffer controller 304 to the data buffer 306, and then, notifies a status as to each of the end points to the signal control unit 308 by using the signals 311 to 313. In this case, the data buffer 306 may change a buffer size thereof in a programmable manner.

When the timer unit 307 measures a preselected time duration corresponding to the interrupt time period of the interrupt mode B, this timer unit 307 notifies this fact to the signal control appratus 308 by using the signal 315. In this case, as the input signals to the timer unit 307, there are the signals 311 to 313 derived from the data buffer 306, the signal 314 used to notify the USB bus signal, and the signal 316 used to notify the SOF signal. These signals may be utilized so as to start the timer operation and also may be used as a count factor in the timer appratus 307. It should also be understood that all of the timer interval (time duration), the count number, and the selecting operations of the signals related thereto as the triggers in the timer unit 307 may be set in a programmable manner. For instance, the following notification methods are conceivable. That is, while an SOF signal is used as a count factor, every time 5 counts are counted, this fact is notified to the signal control unit 308. Also, while a completion of a data transmission by the end point buffer 306 is used as a trigger for starting the timer operation, such a fact is notified to the signal control unit 308 after 3 ms.

The signal control unit 308 controls timing at which the interrupt signal 317 is outputted in response to an occurrence of a bus event. In other words, when such a bus event to which the interrupt mode A is applied occurs, the signal control unit 308 immediately supplies the interrupt signal 317 to the CPU 310. On the other hand, when such a bus event to which the interrupt mode B is applied occurs, the signal control unit 308 supplies the interrupt signal 317 to the CPU 310 in response to (in synchronism with) the signal 315 supplied from the timer unit 307.

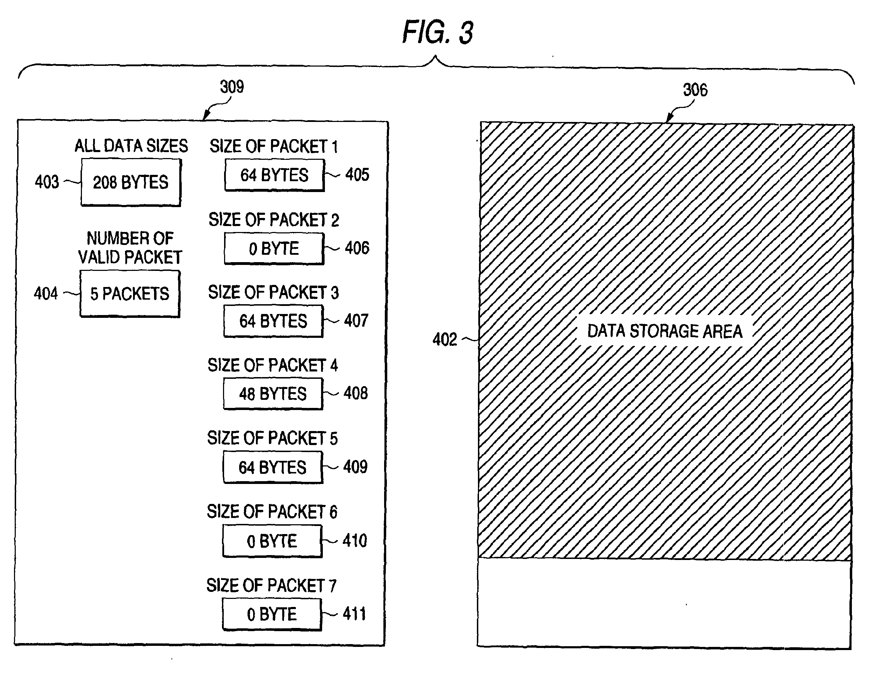

Referring now to Fig. 3, a description will be made of a structure of each of end point buffers which constitute the data buffer 306, and also a structure of a status register 309 corresponding thereto. In Fig. 3, the respective end point buffers which constitute the data buffer 306 own a data storage area 402. Also, the status register 309 includes registers 405 to 411, a register 403 for storing thereinto all sizes of data stored in each of the end point buffer, and a register 404 for storing thereinto a total number of effective packets. The registers 405 to 411 store thereinto a storage data size every data packet in correspondence with each of the end point buffers.

In this case, operations executed when data is received will now be described. First, it is so assumed that the transfer 2 within the K-th frame shown in Fig. 1 corresponds to a transfer operation of packet communication data. To execute an interrupt 210 made by the interrupt mode B, the timer unit 307 measures a preselected time duration (5 ms in this embodiment) which corresponds to an interrupt time period. Assuming now that the transfer 2 is constituted by 5 data packets, whereas data sizes of the respective data packets are selected to be 64 bytes, 0 byte, 64 bytes, 48 bytes, and 64 bytes, respectively. In this case, 0-byte data corresponds to such data that a data region thereof is equal to 0 byte, and this data owns only a header region indicative of a transfer destination and the like. These data are buffered until these data are processed by the interrupt 210 in a batch mode, and information as to data sizes and the like is stored into each of these registers employed in the status register 309. An arbitrarily-selected number of these registers 405 to 411 which store thereinto the storage data sizes every data packet may be employed. Since a bulk transfer for transferring packet communication data occurs in a non-periodic manner and further 0-byte data can be transferred in accordance with the USB specification, such a register 404 is needed which stores thereinto a total number of effective packets, namely, information capable of indicating which portion of the registers 405 to 411 is valid.

The example of Fig. 3 represents that 5 packets are received, and 208-byte data is constructed as entire data. It can be seen that although 0-byte data stored in the register 406 is valid, 0-byte data stored in both the registers 410 and 411 are invalid. As explained above, since segmentation of the plural packets is clearly defined by the status register 309, when the interrupt operation which is made of the interrupt mode B managed based upon the time is carried out, the data can be assembled in the flexible manner. Further, the register 403 used to store thereinto the data sizes of all data may be used in such a case that the data is transferred between the end point buffer and another memory in the DMA transfer mode. It should also be noted that operations executed when the data is transmitted are carried out in a similar manner to those performed when the data is received.

As apparent from the above-explained descriptions, in accordance with the data processing device used in the serial communication system of the present invention, while the two sorts of interrupt modes are combined with each other, namely, the interrupt mode "A" (first interrupt mode) is combined with the interrupt mode "B" (second interrupt mode), a total time of the interrupt operations may be adjusted on the side of the USB device (data processing device). Also, since the work load given to the CPU is reduced, the USB interface (serial interface) can be assembled, or combined with the composite system. In addition, even when the interrupt mode B which is managed based on the time is used, the data transfer rate equal to that of the conventional system can be maintained.

## Claims

1. A data processing device used in a serial communication system, for communicating with a host computer (300) via a serial interface (301), comprising:
a central processing unit (310) for executing a process operation with respect to a bus event (200);
an interrupt mode setting unit (308) for previously setting any one of a first interrupt mode (209) and a second interrupt mode (210) for every bus event (200), said first interrupt mode (209) immediately producing an interrupt with respect to said central processing unit (310) in response to one bus event (200) so as to allow said central processing unit (310) to execute a process operation (205) with respect to said one bus event (200), and said second interrupt mode (210) buffering said one bus event (200) until such timing which is determined based upon a predetermined interrupt time period, and thereafter producing an interrupt (210) with respect to said central processing unit (310) so as to allow said central processing unit (310) to execute the process operation (205) with respect to said one bus event (200); and a process executing unit (308) for executing either a process (206, 207) made by the first interrupt mode (209) or a process (208) made by the second interrupt mode (210) based upon the content which is previously set by said interrupt mode setting unit (308) when a bus event (200) occurs,
**characterised by**
said predetermined interrupt time period defined in the second interrupt mode (210) is determined based upon a signal (316) having a predetermined time period and supplied from said host computer.

2. A data processing device used in a serial communication system as claimed in claim 1 further comprising:
a buffer unit (306) which stores said bus event (200); and
a register unit (309) which stores a data size (405, ... 411) of each of data packets constituting said bus event (200), all of said data sizes (403) of said bus event (200), and a total number of the data packets (404) constituting said bus event (200), wherein said buffer unit (306) and said register unit (309) perform the buffering of the bus event (200) in the second interrupt mode (210).

3. A data processing device used in a serial communication system as claimed in claim 1, wherein mode setting operation by said interrupt mode setting unit (308) is carried out in a programmable manner.

## Patentansprüche

1. Datenverarbeitungsvorrichtung, die in einem seriellen Kommunikationssystem zum Kommunizieren mit einem Host-Computer (300) über eine serielle Schnittstelle (301) eingesetzt wird, wobei sie umfasst:
eine zentrale Verarbeitungseinheit (310) zum Ausführen eines Verarbeitungsvorgangs in Bezug auf ein Bus-Ereignis (200);
eine Interrupt-Modus-Einstelleinheit (308), die im Voraus einen ersten Interrupt-Modus (209) oder einen zweiten Interrupt-Modus (210) für jedes Bus-Ereignis (200) einstellt, wobei der erste Interrupt-Modus (209) in Reaktion auf ein Bus-Ereignis (200) sofort einen Interrupt in Bezug auf die zentrale Verarbeitungseinheit (310) erzeugt, so dass die zentrale Verarbeitungseinheit (310) einen Verarbeitungsvorgang (205) in Bezug auf das eine Bus-Ereignis (200) ausführen kann, und der zweite Interrupt-Modus (210) das eine Bus-Ereignis (200) bis zu einem Zeitpunkt puffert, der auf Basis eines vorgegebenen Interrupt-Zeitraums bestimmt wird, und anschließend einen Interrupt (210) in Bezug auf die zentrale Verarbeitungseinheit (310) erzeugt, so dass die zentrale Verarbeitungseinheit (310) den Verarbeitungsvorgang (205) in Bezug auf das eine Bus-Ereignis (200) ausführen kann, und eine Verarbeitungs-Ausführeinheit (308) zum Ausführen entweder einer Verarbeitung (206, 207), die durch den ersten Interrupt-Modus (209) erzeugt wird, oder einer Verarbeitung (208), die durch den zweiten Interrupt-Modus (210) erzeugt wird, auf Basis des Inhaltes, der zuvor durch die Interrupt-Modus-Einstelleinheit (308) eingestellt wird, wenn ein Bus-Ereignis (200) auftritt,
**dadurch gekennzeichnet, dass**
der vorgegebene Interrupt-Zeitraum, der in dem zweiten Interrupt-Modus (210) definiert ist, auf Basis eines Signals (310) bestimmt wird, dass einen vorgegebenen Zeitraum hat und von dem Host-Computer zugeführt wird.

2. Datenverarbeitungsvorrichtung, die in einem seriellen Kommunikationssystem eingesetzt wird, nach Anspruch 1, wobei sie des Weiteren umfasst:
eine Puffer-Einheit (306), die das Bus-Ereignis (200) speichert; und
eine Register-Einheit (309), die eine Datengröße (405, ... 411) jedes der Daten-pakete, die das Bus-Ereignis (200) bilden, alle Datengrößen (403) des Bus-Ereignisses (200) und eine Gesamtzahl der Daten-Pakete (404), die das Bus-Ereignis (200) bilden, speichert, wobei die Puffer-Einheit (306) und die Register-Einheit (309) Puffern des Bus-Ereignisses (200) in dem zweiten Interrupt-Modus (210) durchführen.

3. Datenverarbeitungsvorrichtung, die in einem seriellen Kommunikationssystem eingesetzt wird, nach Anspruch 1, wobei der Modus-Einstellvorgang durch die Interrupt-Modus-Einstelleinheit (308) programmierbar ausgeführt wird.

## Revendications

1. Appareil de traitement de données utilisé dans un système de communication série, pour communiquer avec un ordinateur hôte (300) via une interface série (301), comprenant :
une unité centrale de traitement (310) pour exécuter une opération de traitement relative à un événement de bus (200) ;
une unité d'établissement de mode interruption (308) pour établir préalablement l'un quelconque d'un premier mode interruption (209) et d'un second mode interruption (210) pour chaque événement de bus (200), ledit premier mode interruption (209) produisant immédiatement une interruption relative à ladite unité centrale de traitement (310) en réponse à un événement de bus (200) de sorte à permettre à ladite unité centrale de traitement (310) d'exécuter une opération de traitement (205) relative audit un événement de bus (200), et ledit second mode interruption (210) mettant en tampon ledit un événement de bus (200) jusqu'à une temporisation qui est déterminée en fonction d'une période d'interruption prédéterminée, et produisant ensuite une interruption (210) relative à ladite unité centrale de traitement (310) de sorte à permettre à ladite unité centrale de traitement (310) d'exécuter l'opération de traitement (205) relative audit un événement de bus (200) ; et une unité d'exécution de traitement (308) pour exécuter soit un traitement (206, 207) effectué par le premier mode interruption (209), soit un traitement (208) effectué par le second mode interruption (210) en se basant sur le contenu qui est fixé au préalable par ladite unité d'établissement de mode interruption (308) lorsqu'un événement de bus (200) se produit,
**caractérisé en ce que**
ladite période d'interruption prédéterminée définie dans le second mode interruption (210) est déterminée en se basant sur un signal (316) ayant une période prédéterminée et délivré par ledit ordinateur hôte.

2. Appareil de traitement de données utilisé dans un système de communication série selon la revendication 1 comprenant en outre :
une unité tampon (306) qui stocke ledit événement de bus (200) ; et
une unité de registre (309) qui stocke une taille de donnée (405, ... 411) de chacun des paquets de données constituant ledit événement de bus (200), toutes lesdites tailles de donnée (403) dudit événement de bus (200), et un nombre total de paquets de données (404) constituant ledit événement de bus (200), dans lequel ladite unité tampon (306) et ladite unité de registre (309) exécutent la mise en tampon de l'événement de bus (290) dans le second mode interruption (210).

3. Appareil de traitement de données utilisé dans un système de communication série selon la revendication 1, dans lequel l'opération d'établissement de mode par ladite unité d'établissement de mode interruption (308) est réalisée de façon programmable.
